# EUROPÄISCHE PATENTSCHRIFT

(11) **EP 3 345 780 B1**
(45) Veröffentlichungstag und Bekanntmachung des Hinweises auf die Patenterteilung: **05.02.2020**
(21) Anmeldenummer: 17205491.8
(22) Anmeldetag: 05.12.2017
(51) Int. Cl.: B60K 15/03, B60K 15/04, B60K 15/05, B60K 15/035

(54) **KRAFTSTOFFTANKVORRICHTUNG**
FUEL TANK APPARATUS
DISPOSITIF FORMANT RÉSERVOIR DE CARBURANT

(30) Priorität: 10.01.2017 EP 17150785
(43) Veröffentlichungstag der Anmeldung: 11.07.2018
(73) Patentinhaber: MAGNA STEYR Fuel Systems GmbH Werk Schwäbisch Gmünd, 73529 Schwäbisch Gmünd (DE)
(72) Erfinder: FETZER, Horst, 73054 Eislingen (DE); ZANEK, Steffen, 73525 Schwäbisch Gmünd (DE)
(74) Vertreter: Zangger, Bernd

(56) Entgegenhaltungen:
- EP-A1- 2 832 572
- EP-A2- 0 976 602
- DE-A1- 3 225 351
- DE-A1-102007 040 416
- DE-A1-102010 043 644
- DE-A1-102013 020 784
- JP-A- H09 226 389

## Beschreibung

### Gebiet der Erfindung

Die vorliegende Erfindung betrifft eine Kraftstofftankvorrichtung für ein Kraftfahrzeug und ein Verfahren zur Herstellung einer solchen Kraftstofftankvorrichtung.

### Stand der Technik

Mit Kraftstoff betriebene Kraftfahrzeuge verwenden üblicherweise einen Kraftstofftank, insbesondere Benzin- oder Dieseltank, zum Mitführen des benötigten Kraftstoffes. In derartige Kraftstofftanks werden mittlerweile verschiedene Zubauten eingebaut um die Funktionalität des Kraftstofftanks zu erhöhen, beispielsweise Kraftstoffförderpumpen, Entlüftungsventile, Füllstandssensoren, Schwalltöpfe, Ansaugleitungen etc.

Der Einbau derartiger Zusatzbauteile in einen Kraftstofftank ist oft mühsam, da er auf engem Raum, beispielsweise durch Montageöffnungen, erfolgen muss und geeignete Befestigungen am Kraftstoffbehälter vorgesehen werden müssen.

Zudem ist eine Nutzung von geringen Kraftstoffmengen in einem Kraftstofftank, die beispielsweise bei einer Erstbetankung nach Montage des Fahrzeuges oder bei geringem Tankfüllstand bei Berg- und Talfahrten auftreten können, schwierig, da sich der Kraftstoff im gesamten Kraftstofftank verteilt, der insbesondere bei Tanks für Lastkraftwagen sehr groß und mit einer komplexen Form ausgebildet sein kann. Die Dokumente EP 0 976 602 A2, DE 32 25 351 A1, DE 10 2013 020784 A1 und JP H09 226389 A offenbaren Kraftstofftankvorrichtungen für Kraftfahrzeuge, die einen Kraftstofftank und ein Betankungsmodul mit Kraftstoffspeicher umfassen.

### Zusammenfassung der Erfindung

Es ist eine Aufgabe der Erfindung, eine Kraftstofftankvorrichtung für ein Kraftfahrzeug in dieser Hinsicht zu verbessern und insbesondere eine Kraftstofftankvorrichtung anzugeben, die geringe Kraftstoffmengen im Kraftstofftank effizient nutzen kann und dabei einfach hergestellt werden kann. Eine weitere Aufgabe der Erfindung ist es ein einfaches Verfahren zur Herstellung einer solchen Kraftstofftankvorrichtung anzugeben.

Die Lösung der Aufgabe erfolgt durch eine Kraftstofftankvorrichtung nach Anspruch 1.

Erfindungsgemäß wird ein zusätzlicher, im Vergleich zum Kraftstofftank üblicherweise kleinerer Kraftstoffspeicher verwendet, der in den größeren Kraftstofftank eingesetzt wird oder von außen an den Kraftstofftank angesetzt wird. Dieser Kraftstoffspeicher wird vor dem Einbau in den Kraftstofftank bzw. vor dem Anbau bereits mit nötigen Zusatzkomponenten ausgebildet. Damit der zusätzliche Kraftstoffspeicher eine Funktion eines effizienten Restmengenbehälters im Kraftstofftank ausführen kann, wird sichergestellt, dass der Kraftstoff bei der Betankung des Kraftfahrzeuges und somit des Kraftstofftanks ausschließlich, insbesondere direkt und unmittelbar, in den Kraftstoffspeicher gelangt. Das außerhalb des Kraftstofftanks bereits vorgefertigte Betankungsmodul umfasst daher einen Einfüllstutzen zur Befüllung des Kraftstoffspeichers des Betankungsmoduls.

Der Einfüllstutzen kann direkt am Kraftstoffspeicher ausgebildet sein, insbesondere als Kragen des Kraftstoffspeichers. Der Einfüllstutzen kann dann durch eine vorbereitete Öffnung des Kraftstofftanks reichen.

Der Einfüllstutzen ist an einem Abdeckelement des Betankungsmoduls ausgebildet, wobei das Abdeckelement von außen auf den Kraftstofftank aufgesetzt ist. Der Einfüllstutzen ragt in eine Öffnung des Kraftstoffspeichers und/oder in einen Kragen des Kraftstoffspeichers.

Das Abdeckelement umfasst einen Tankdeckel zum Verschließen des Einfüllstutzens.

Das Betankungsmodul, insbesondere der Einfüllstutzen oder der Kragen, kann auch einen Diebstahlschutz gegen den Diebstahl von Kraftstoff umfassen.

Bevorzugt sind am Kraftstoffspeicher eine oder mehrere Verbindungsöffnungen und/oder Verbindungsventile angeordnet, so dass eine Betankung des Kraftstofftanks über die Verbindungsöffnung und/oder das Verbindungsventil des Kraftstoffspeichers erfolgen kann. Das Ventil kann dazu eingerichtet sein, die Verbindungsöffnung zwischen Kraftstoffspeicher und Kraftstofftank freizugeben, wenn am Ventil, im Kraftstoffspeicher, Kraftstoff vorhanden ist und die Verbindungsöffnung zu schließen, wenn kein Kraftstoff vorhanden ist.

Bevorzugt ist im Kraftstofftank, außerhalb des Kraftstoffspeichers, zumindest ein Schwimmerventil angeordnet, das so eingerichtet ist, dass das Schwimmerventil eine Fluidverbindung zum Kraftstoffspeicher öffnet, wenn es von Kraftstoff umgeben ist und dass das Schwimmerventil die Fluidverbindung zum Kraftstoffspeicher schließt, wenn es nicht von Kraftstoff umgeben ist.

Der Kraftstoffspeicher, und somit das Betankungsmodul, weist bevorzugt zumindest eine Saugleitung auf, wobei die Saugleitung in den Kraftstofftank mündet. Vom Mündungsende der Saugleitung im Kraftstofftank, das auch mit einem Schwimmerventil ausgestattet sein kann, kann Kraftstoff in den Kraftstoffspeicher gesaugt werden.

Vorzugsweise weist das Betankungsmodul einen Füllstandssensor zur Messung des Füllstands im Kraftstofftank auf.

Das Betankungsmodul weist bevorzugt eine Kraftstoffpumpe zur Förderung des Kraftstoffes aus dem Kraftstoffspeicher auf.

Das Betankungsmodul weist bevorzugt auch Vorlauf- und Rücklaufleitungen zu einem Motor des Kraftfahrzeuges auf. Die Vorlauf- und Rücklaufleitungen können insbesondere am Abdeckelement befestigt sein.

Das Betankungsmodul weist bevorzugt ein Druckausgleichsventil und/oder eine Entlüftung auf.

Vorzugsweise weist das Betankungsmodul einen Wasserabscheider auf.

Der Kraftstofftank kann insbesondere der Haupttank eines Lastkraftwagens sein, insbesondere der Haupttank eines Satteltanks eines Lastkraftwagens.

Ein Verfahren zur Herstellung einer solchen Kraftstofftankvorrichtung kann die Schritte umfassen, dass das Betankungsmodul vor dem Einsetzen montiert wird, wobei die Montage den Einfüllstutzen umfasst oder optional nicht umfasst, anschließend das Betankungsmodul in den Kraftstofftank eingesetzt wird und im Kraftstofftank befestigt wird. Anschließend kann der Einfüllstutzen mit dem Kraftstoffspeicher fluidverbunden werden, wenn dieser nicht schon vor der Befestigung des Kraftstoffspeichers an diesem montiert wurde.

Eine Betankung des Kraftstofftanks erfolgt dann ausschließlich über den Einfüllstutzen, der gleichzeitig als Einfüllstutzen zur direkten Betankung des Kraftstoffspeichers und als Einfüllstutzen zur indirekten Betankung des Kraftstofftanks wirkt.

### Kurzbeschreibung der Zeichnungen

Die Erfindung wird im Folgenden beispielhaft unter Bezugnahme auf die Zeichnungen beschrieben.
- Fig. 1: ist eine schematische Schnittdarstellung einer erfindungsgemäßen Kraftstofftankvorrichtung während deren Herstellung.
- Fig. 2: ist eine schematische Schnittdarstellung einer nicht erfindungsgemäßen Kraftstofftankvorrichtung.
- Fig. 3: ist eine schematische Schnittdarstellung einer erfindungsgemäßen Kraftstofftankvorrichtung in einer weiteren Ausführungsform.
- Fig. 4: ist eine schematische Schnittdarstellung einer nicht erfindungsgemäßen Kraftstofftankvorrichtung in einer weiteren Ausführungsform.

### Detaillierte Beschreibung der Erfindung

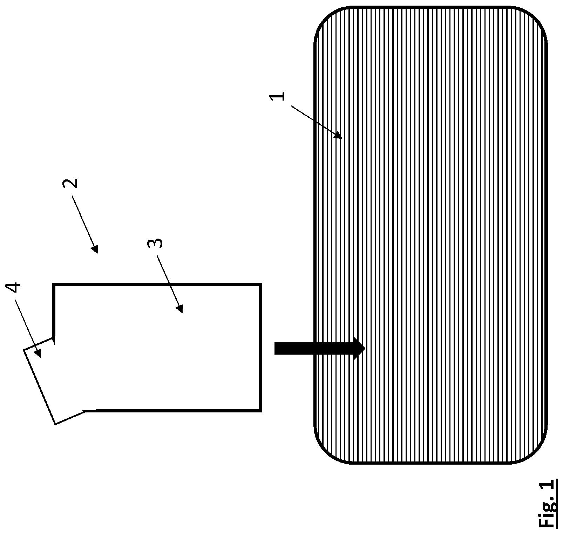

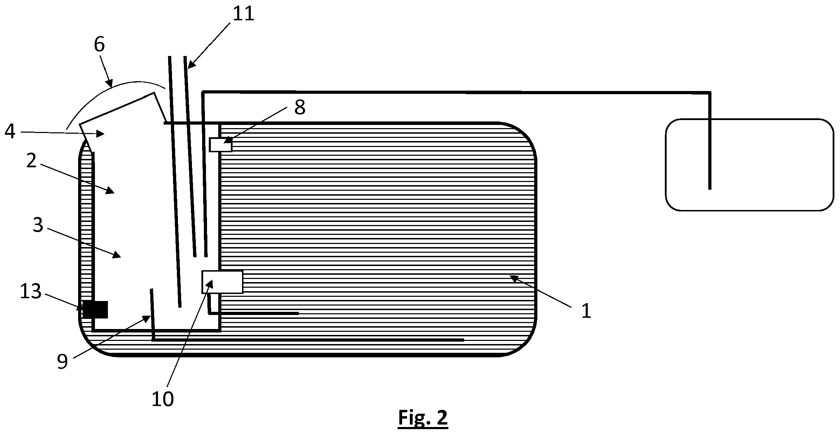

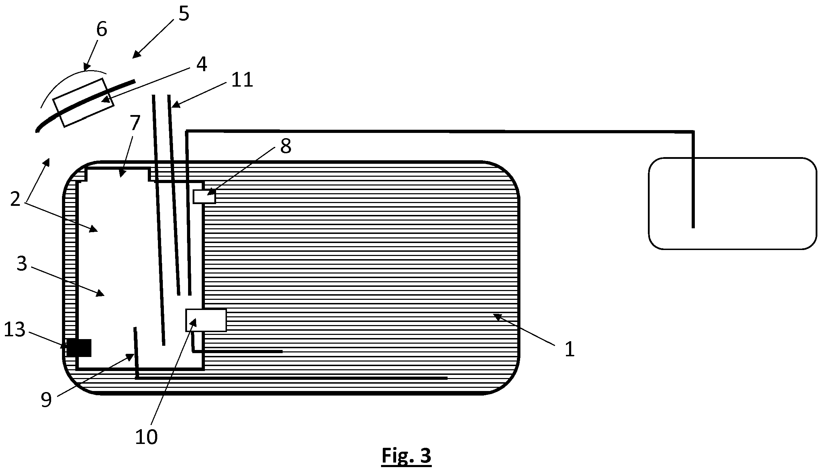

In Fig. 1 ist eine erfindungsgemäße Kraftstofftankvorrichtung während der Herstellung dargestellt, welche einen Kraftstofftank 1 umfasst und ein Betankungsmodul 2. Das Betankungsmodul 2 wird zumindest großteils vor dessen Einsetzen und Befestigen im Kraftstofftank 1 montiert und anschließend, in der in Fig. 1 eingezeichneten Pfeilrichtung, in den Kraftstofftank 1 eingesetzt und am Kraftstofftank 1 befestigt. Der Kraftstofftank 1 weist zum Einsetzen des Betankungsmoduls 2 beispielsweise eine Montageöffnung auf oder besteht während des Einsetzens beispielsweise nur aus einer Halbschale, auf welche erst nach dem Einsetzen des Betankungsmoduls 2 eine zweite Halbschale aufgeschweißt oder verschraubt oder geklebt wird. Ein Einfüllstutzen 4 kann bereits vor dem Einsetzen des Kraftstoffspeichers 3 an diesem ausgebildet oder mit diesem verbunden sein, wie in Fig. 1 und Fig. 2 dargestellt. Andernfalls kann ein Einfüllstutzen 4 auch nach dem Einsetzen mit dem Kraftstoffspeicher 3 verbunden werden, wie in Fig. 3 dargestellt.

Fig. 2 zeigt weitere Details der nicht erfindungsgemäßen Kraftstofftankvorrichtung. Diese umfasst zumindest eine, bevorzugt mehrere Verbindungsöffnungen 8, die am Kraftstoffspeicher 3 ausgebildet sind, nämlich in der Begrenzungswand, die den Kraftstoffspeicher 3 zum Kraftstofftank 1 hin abgrenzt, und die dazu eingerichtet sind, eine Betankung des Kraftstofftanks 1 über die Verbindungsöffnung 8 zu ermöglichen.

Wenn beim Betanken des Kraftstoffspeichers 3 über den Einfüllstutzen 4, oder beim Auffüllen des Kraftstoffspeichers 3 über eine Rücklaufleitung 11, der Kraftstoffspiegel im Kraftstoffspeicher 3 das Niveau der Verbindungsöffnung 8 erreicht, kann der Kraftstoff in den Kraftstofftank 1 überfließen.

Das Betankungsmodul 2 umfasst zumindest eine Vorlauf- und Rücklaufleitung 11, für die Leitung des Kraftstoffes aus dem Kraftstoffspeicher 3 zu und von einem Motor des Kraftfahrzeuges. Zur Förderung des Kraftstoffes kann das Betankungsmodul 2 eine Kraftstoffpumpe aufweisen.

Die Rücklaufleitung 11 ist so angeordnet, dass rückfließender Kraftstoff stets in den Kraftstoffspeicher 3 gelangt.

Die Kraftstofftankvorrichtung weist ein Schwimmerventil 13 im Kraftstofftank 1 auf, das eine Fluidverbindung zum Kraftstoffspeicher 3 öffnet, wenn das Schwimmerventil 13 im Kraftstofftank 1 von Kraftstoff umgeben ist und diese Fluidverbindung schließt, wenn kein Kraftstoff am Schwimmerventil 13 anliegt. Wenn das Schwimmerventil 13 geöffnet ist, kann eine Entnahme von Kraftstoff aus dem Kraftstofftank 1 über das Schwimmerventil 13 erfolgen. Wenn das Schwimmerventil 13 geschlossen ist, weil kein Kraftstoff im Kraftstofftank 1 am Schwimmerventil 13 zur Verfügung steht, erfolgt eine Kraftstoffversorgung lediglich aus dem Kraftstoffspeicher 3.

Das Schwimmerventil 13 kann durch eine Einheit gebildet sein, die umfasst: das Schwimmerventil 13, angeordnet im Kraftstofftank 1 außerhalb des Kraftstoffspeichers 3, daran anschließend ein T-Stück, daran anschließend ein Unterdruckventil, insbesondere Federventil, im Kraftstoffspeicher 3.

Das T-Stück, welches sich zwischen dem Federventil, also dem Unterdruckventil, und dem Schwimmerventil 13 befindet, kann direkt mit der Vorlaufleitung, insbesondere Dieselvorlaufleitung, verbunden sein.

Wenn das Schwimmerventil 13 geschlossen ist, entsteht ein Unterdruck in der Vorlaufleitung und das Unterdruckventil, also Federventil, öffnet. Die Kraftstoffversorgung erfolgt dann über den Kraftstoffspeicher 3.

Wenn das Schwimmerventil 13 geöffnet ist, findet die Kraftstoffversorgung über das Schwimmerventil 13 im Kraftstofftank 1 statt. Das Federventil ist dann geschlossen. Es erfolgt keine Versorgung über den Kraftstoffspeicher.

Der Kraftstoffspeicher 3 kann zudem mehrere Saugleitungen 9 aufweisen, die in den Kraftstofftank 1 münden, so dass Kraftstoff aus dem Kraftstofftank 1 in den Kraftstoffspeicher 3 gesaugt werden kann. An den freien Enden der Saugleitungen 9 können ebenfalls Schwimmerventile angeordnet sein.

Das Betankungsmodul 2 weist zudem einen Füllstandssensor 10, beispielsweise einen Kniehebelgeber, zur Messung des Füllstands im Kraftstofftank 1 auf.

Das Betankungsmodul 2 kann ein Druckausgleichsventil und/oder eine Entlüftung aufweisen, ebenso kann das Betankungsmodul 2 einen Wasserabscheider aufweisen.

Das Betankungsmodul 2 umfasst einen Tankdeckel 6 zum Verschließen des Einfüllstutzens 4. Das Betankungsmodul 2 kann auch einen Diebstahlschutz für den Kraftstoff umfassen.

Der Kraftstofftank 1 ist, wie in Fig. 2 und 3 ersichtlich, ein Haupttank eines Satteltanks eines Lastkraftwagens, der zusätzlich zum Haupttank einen Zusatztank 12 aufweist.

Fig. 3 zeigt eine Ausführungsform der Kraftstofftankvorrichtung bei welcher ein Abdeckelement 5 des Betankungsmoduls 2 nachträglich auf die übrigen Teile des Betankungsmoduls 2, insbesondere auf den Kraftstoffspeicher 3, aufgesetzt wird.

Der von außen zugängliche Einfüllstutzen 4 ist an dem Abdeckelement 5 des Betankungsmoduls 2 ausgebildet. Das Abdeckelement 5 ist von außen auf den Kraftstofftank 1 aufgesetzt und an diesem befestigt.

Der Einfüllstutzen 4 wird bevorzugt in einen Kragen 7 des Kraftstoffspeichers 3 eingesetzt, so dass der Einfüllstutzen und der Kraftstoffspeicher direkt fluidleitend verbunden sind und der gesamte Kraftstoff unmittelbar in den Kraftstoffspeicher 3 gelangt.

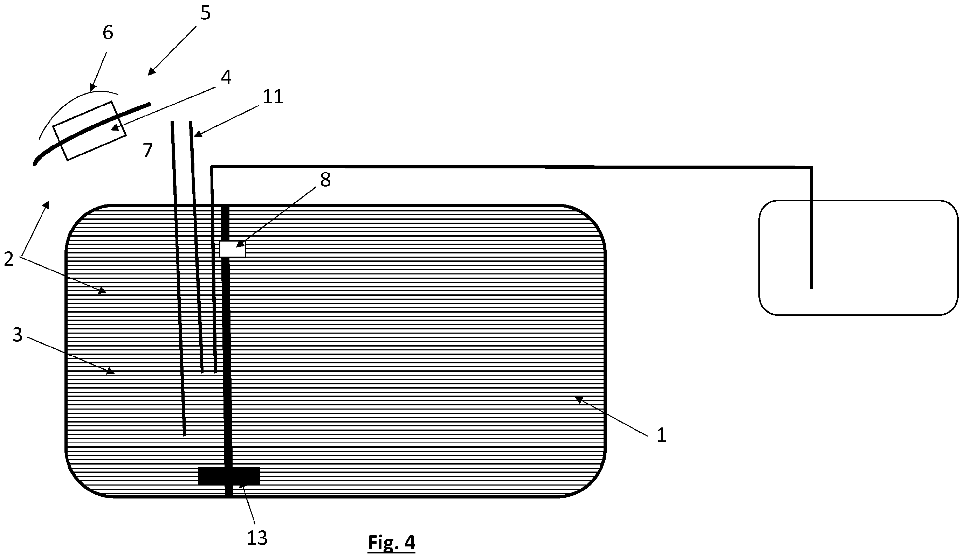

Die Ausführungsform der Fig. 4 unterscheidet sich von den Ausführungsformen der Fig. 1 bis 3 dadurch, dass hier das Betankungsmoduls 2, insbesondere nämlich der Kraftstoffspeicher 3, an eine Wandung des Kraftstofftanks 1 angesetzt ist und an dem Kraftstofftank 1 außen befestigt ist.

Die Befestigung des Betankungsmoduls 2 kann insbesondere mittels einer außen umlaufenden orbitalen Verschweißung, unter Bildung einer Orbitalnaht 14, erfolgen, oder beispielsweise als Verklebung.

Zwischen Kraftstoffspeicher 3 und Kraftstofftank 1 können die Wandungen von Kraftstoffspeicher 3 und Kraftstofftank 1, im Bereich der Orbitalnaht 14, zusammen als metallische Trennwand wirken.

### Bezugszeichenliste

- 1: Kraftstofftank
- 2: Betankungsmodul
- 3: Kraftstoffspeicher
- 4: Einfüllstutzen
- 5: Abdeckelement
- 6: Tankdeckel
- 7: Kragen
- 8: Verbindungsöffnung
- 9: Saugleitung
- 10: Füllstandssensor
- 11: Vorlauf- und Rücklaufleitungen
- 12: Zusatztank
- 13: Schwimmerventil
- 14: Orbitalnaht

## Patentansprüche

1. Kraftstofftankvorrichtung für ein Kraftfahrzeug, umfassend einen Kraftstofftank (1) und ein Betankungsmodul (2), wobei das Betankungsmodul (2) in den Kraftstofftank (1) eingesetzt oder an den Kraftstofftank angesetzt ist und am Kraftstofftank (1) befestigt ist, wobei das Betankungsmodul (2) einen Kraftstoffspeicher (3) umfasst und einen Einfüllstutzen (4), wobei der Einfüllstutzen (4) so mit dem Kraftstoffspeicher (3) des Betankungsmoduls (2) fluidverbunden ist, dass eine Betankung über den Einfüllstutzen (4) ausschließlich in den Kraftstoffspeicher (3) erfolgt, wobei der Kraftstofftank (1) über keinen zusätzlichen Einfüllstutzen (4) verfügt, so dass eine Betankung des Kraftstofftanks (1) ausschließlich über den Kraftstoffspeicher (3) des Betankungsmoduls (2) erfolgt, wobei der Einfüllstutzen (4) an einem Abdeckelement (5) des Betankungsmoduls (2) ausgebildet ist, wobei das Abdeckelement (5) von außen auf den Kraftstofftank (1) aufgesetzt ist, **dadurch gekennzeichnet, dass** das Abdeckelement (5) einen Tankdeckel (6) zum Verschließen des Einfüllstutzens (4) umfasst, wobei der Einfüllstutzen (4) in eine Öffnung des Kraftstoffspeichers (3) und/oder in einen Kragen (7) des Kraftstoffspeichers (3) ragt.

2. Kraftstofftankvorrichtung nach Anspruch 1,
**dadurch gekennzeichnet, dass** am Kraftstoffspeicher (3) zumindest eine Verbindungsöffnung (8) und/oder zumindest ein Verbindungsventil angeordnet ist, so dass eine Betankung des Kraftstofftanks (1) über die Verbindungsöffnung (8) und/oder das Verbindungsventil des Kraftstoffspeichers (3) erfolgen kann.

3. Kraftstofftankvorrichtung nach zumindest einem der vorhergehenden Ansprüche,
**dadurch gekennzeichnet, dass** im Kraftstofftank (1) zumindest ein Schwimmerventil (13) angeordnet ist, das so eingerichtet ist, dass das Schwimmerventil (13) eine Fluidverbindung zum Kraftstoffspeicher (3) öffnet, wenn es von Kraftstoff umgeben ist und dass das Schwimmerventil (13) die Fluidverbindung zum Kraftstoffspeicher (3) schließt, wenn es nicht von Kraftstoff umgeben ist.

4. Kraftstofftankvorrichtung nach Anspruch 3,
**dadurch gekennzeichnet, dass** die Kraftstofftankvorrichtung ein Kombinationselement umfasst, wobei das Kombinationselement das Schwimmerventil (13), ein T-Stück und ein Unterdruckventil aufweist, wobei bevorzugt eine Vorlaufleitung zu einem Motor des Kraftfahrzeuges an das T-Stück angeschlossen ist.

5. Kraftstofftankvorrichtung nach zumindest einem der vorhergehenden Ansprüche,
**dadurch gekennzeichnet, dass** der Kraftstoffspeicher (3) an eine Wandung des Kraftstofftanks (1) angesetzt ist und an dem Kraftstofftank (1) befestigt ist, insbesondere mittels einer außen umlaufenden Orbitalnaht (14) verschweißt.

6. Kraftstofftankvorrichtung nach zumindest einem der vorhergehenden Ansprüche,
**dadurch gekennzeichnet, dass** der Kraftstoffspeicher (3) zumindest eine Saugleitung (9) aufweist, wobei die Saugleitung (9) in den Kraftstofftank (1) mündet.

7. Kraftstofftankvorrichtung nach zumindest einem der vorhergehenden Ansprüche,
**dadurch gekennzeichnet, dass** das Betankungsmodul (2) einen Füllstandssensor (10) zur Messung des Füllstands im Kraftstofftank (1) aufweist.

8. Kraftstofftankvorrichtung nach zumindest einem der vorhergehenden Ansprüche,
**dadurch gekennzeichnet, dass** das Betankungsmodul (2) eine Kraftstoffpumpe zur Förderung des Kraftstoffes aus dem Kraftstoffspeicher (3) aufweist und/oder Vorlauf- und Rücklaufleitungen (11), für die Leitung des Kraftstoffes zu und von einem Motor des Kraftfahrzeuges.

9. Kraftstofftankvorrichtung nach zumindest einem der vorhergehenden Ansprüche,
**dadurch gekennzeichnet, dass** das Betankungsmodul (2) ein Druckausgleichsventil und/oder eine Entlüftung aufweist.

10. Kraftstofftankvorrichtung nach zumindest einem der vorhergehenden Ansprüche,
**dadurch gekennzeichnet, dass** das Betankungsmodul (2) einen Wasserabscheider aufweist.

11. Kraftstofftankvorrichtung nach zumindest einem der vorhergehenden Ansprüche,
**dadurch gekennzeichnet, dass** der Kraftstofftank (1) ein Haupttank eines Satteltanks eines Lastkraftwagens ist.

12. Verfahren zur Herstellung einer Kraftstofftankvorrichtung nach zumindest einem der vorhergehenden Ansprüche,
**dadurch gekennzeichnet, dass** das Betankungsmodul (2) vor dem Einsetzen oder Ansetzen in oder an den Kraftstofftank (1) montiert wird, wobei die Montage des Betankungsmoduls (2), vor dem Einsetzen oder Ansetzen, den Einfüllstutzen (4) nicht umfasst, anschließend das Betankungsmodul (2) in den Kraftstofftank (1) eingesetzt oder angesetzt wird und im oder am Kraftstofftank (1) befestigt wird, und anschließend der Einfüllstutzen (4) mit dem Kraftstoffspeicher (3) fluidverbunden wird, so dass eine Betankung des Kraftstofftanks (1) ausschließlich über den Einfüllstutzen (4) und über den Kraftstoffspeicher (3) des Betankungsmoduls (2) erfolgen kann.

## Claims

1. Fuel tank apparatus for a motor vehicle, comprising a fuel tank (1) and a filling module (2), the filling module (2) being inserted into the fuel tank (1) or being placed onto the fuel tank and being fastened to the fuel tank (1), the filling module (2) comprising a fuel accumulator (3) and a filler neck (4), the filler neck (4) being connected fluidically to the fuel accumulator (3) of the filling module (2) in such a way that filling takes place via the filler neck (4) exclusively into the fuel accumulator (3), the fuel tank (1) not having an additional filler neck (4), with the result that filling of the fuel tank (1) takes place exclusively via the fuel accumulator (3) of the filling module (2) wherein the filler neck (4) is configured on a covering element (5) of the filling module (2), the covering element (5) being placed onto the fuel tank (1) from the outside, **characterized in that** the covering element (5), comprises a filler cap (6) for closing the filler neck (4) wherein the filler neck (4) protrudes into an opening of the fuel accumulator (3) and/or into a collar (7) of the fuel accumulator (3).

2. Fuel tank apparatus according to Claim 1, **characterized in that** at least one connecting opening (8) and/or at least one connecting valve are/is arranged on the fuel accumulator (3), with the result that filling of the fuel tank (1) can take place via the connecting opening (8) and/or the connecting valve of the fuel accumulator (3).

3. Fuel tank apparatus according to at least one of the preceding claims, **characterized in that** at least one float valve (13) is arranged in the fuel tank (1), which float valve (13) is set up in such a way that the float valve (13) opens a fluid connection to the fuel accumulator (3) when it is surrounded by fuel, and **in that** the float valve (13) closes the fluid connection to the fuel accumulator (3) when it is not surrounded by fuel.

4. Fuel tank apparatus according to Claim 3, **characterized in that** the fuel tank apparatus comprises a combination element, the combination element having the float valve (13), a T-piece and a vacuum valve, a forward feed line to an engine of the motor vehicle preferably being connected to the T-piece.

5. Fuel tank apparatus according to at least one of the preceding claims, **characterized in that** the fuel accumulator (3) is attached to a wall of the fuel tank (1) and is fastened to the fuel tank (1), in particular is welded by means of an orbital seam (14) which runs around on the outside.

6. Fuel tank apparatus according to at least one of the preceding claims, **characterized in that** the fuel accumulator (3) has at least one vacuum line (9), the vacuum line (9) opening into the fuel tank (1).

7. Fuel tank apparatus according to at least one of the preceding claims, **characterized in that** the filling module (2) has a filling level sensor (10) for measuring the filling level in the fuel tank (1).

8. Fuel tank apparatus according to at least one of the preceding claims, **characterized in that** the filling module (2) has a fuel pump for conveying the fuel out of the fuel accumulator (3) and/or forward feed and return lines (11), for conducting the fuel to and from an engine of the motor vehicle.

9. Fuel tank apparatus according to at least one of the preceding claims, **characterized in that** the filling module (2) has a pressure equalization valve and/or a ventilation means.

10. Fuel tank apparatus according to at least one of the preceding claims, **characterized in that** the filling module (2) has a water separator.

11. Fuel tank apparatus according to at least one of the preceding claims, **characterized in that** the fuel tank (1) is a main tank of a saddle tank of a lorry.

12. Method for producing a fuel tank apparatus according to at least one of the preceding claims, **characterized in that** the filling module (2) is assembled before being inserted into or attached onto the fuel tank (1), the assembly of the filling module (2), before the insertion or attachment, not comprising the filler neck (4), the filling module (2) subsequently being inserted or placed into the fuel tank (1) and being fastened in or to the fuel tank (1), and the filler neck (4) subsequently being connected fluidically to the fuel accumulator (3), with the result that filling of the fuel tank (1) can take place exclusively via the filler neck (4) and via the fuel accumulator (3) of the filling module (2).

## Revendications

1. Dispositif formant réservoir de carburant pour un véhicule automobile, comprenant un réservoir de carburant (1) et un module de remplissage (2), le module de remplissage (2) étant inséré dans le réservoir de carburant (1) ou étant appliqué contre le réservoir de carburant et étant fixé au réservoir de carburant (1), le module de remplissage (2) comprenant un accumulateur de carburant (3) et une tubulure de remplissage (4), la tubulure de remplissage (4) étant en liaison fluidique avec l'accumulateur de carburant (3) du module de remplissage (2) de telle sorte qu'un remplissage soit effectué par le biais de la tubulure de remplissage (4) exclusivement dans l'accumulateur de carburant (3), le réservoir de carburant (1) ne disposant d'aucune tubulure de remplissage supplémentaire (4) de telle sorte que le remplissage du réservoir de carburant (1) s'effectue exclusivement par le biais de l'accumulateur de carburant (3) du module de remplissage (2), la tubulure de remplissage (4) étant réalisée au niveau d'un élément de recouvrement (5) du module de remplissage (2), l'élément de recouvrement (5) étant posé depuis l'extérieur sur le réservoir de carburant (1), **caractérisé en ce que** l'élément de recouvrement (5) comprend un couvercle de réservoir (6) pour fermer la tubulure de remplissage (4), la tubulure de remplissage (4) pénétrant dans une ouverture de l'accumulateur de carburant (3) et/ou dans une collerette (7) de l'accumulateur de carburant (3).

2. Dispositif formant réservoir de carburant selon la revendication 1,
**caractérisé en ce qu'**au moins une ouverture de liaison (8) et/ou au moins une soupape de liaison est disposée au niveau de l'accumulateur de carburant (3), de telle sorte qu'un remplissage du réservoir de carburant (1) puisse s'effectuer par le biais de l'ouverture de liaison (8) et/ou par le biais de la soupape de liaison de l'accumulateur de carburant (3).

3. Dispositif formant réservoir de carburant selon au moins l'une quelconque des revendications précédentes,
**caractérisé en ce qu'**au moins une valve à flotteur (13) est disposée dans le réservoir de carburant (1), laquelle est prévue de telle sorte que la valve à flotteur (13) ouvre une liaison fluidique avec l'accumulateur de carburant (3) lorsqu'elle est entourée par le carburant et **en ce que** la valve à flotteur (13) ferme la liaison fluidique avec l'accumulateur de carburant (3) lorsqu'elle n'est pas entourée par le carburant.

4. Dispositif formant réservoir de carburant selon la revendication 3,
**caractérisé en ce que** le dispositif formant réservoir de carburant comprend un élément de combinaison, l'élément de combinaison présentant la valve à flotteur (13), une pièce en T et une valve à dépression, une conduite d'alimentation à un moteur du véhicule automobile étant de préférence raccordée à la pièce en T.

5. Dispositif formant réservoir de carburant selon au moins l'une quelconque des revendications précédentes,
**caractérisé en ce que** l'accumulateur de carburant (3) est placé au niveau d'une paroi du réservoir de carburant (1) et est fixé au niveau du réservoir de carburant (1), en particulier est soudé au moyen d'un cordon orbital périphérique extérieur (14).

6. Dispositif formant réservoir de carburant selon au moins l'une quelconque des revendications précédentes,
**caractérisé en ce que** l'accumulateur de carburant (3) présente au moins une conduite d'aspiration (9), la conduite d'aspiration (9) débouchant dans le réservoir de carburant (1).

7. Dispositif formant réservoir de carburant selon au moins l'une quelconque des revendications précédentes,
**caractérisé en ce que** le module de remplissage (2) présente un capteur de niveau de remplissage (10) pour mesurer le niveau de remplissage dans le réservoir de carburant (1).

8. Dispositif formant réservoir de carburant selon au moins l'une quelconque des revendications précédentes,
**caractérisé en ce que** le module de remplissage (2) présente une pompe à carburant pour refouler le carburant hors de l'accumulateur de carburant (3) et/ou des conduites d'alimentation et de retour (11) pour la conduite de carburant vers et depuis un moteur du véhicule automobile.

9. Dispositif formant réservoir de carburant selon au moins l'une quelconque des revendications précédentes,
**caractérisé en ce que** le module de remplissage (2) présente une valve d'équilibrage de la pression et/ou un désaérage.

10. Dispositif formant réservoir de carburant selon au moins l'une quelconque des revendications précédentes,
**caractérisé en ce que** le module de remplissage (2) présente un séparateur d'eau.

11. Dispositif formant réservoir de carburant selon au moins l'une quelconque des revendications précédentes,
**caractérisé en ce que** le réservoir de carburant (1) est un réservoir principal d'un réservoir de semi-remorques d'un poids-lourd.

12. Procédé de fabrication d'un dispositif formant réservoir de carburant selon au moins l'une quelconque des revendications précédentes,
**caractérisé en ce que** le module de remplissage (2) est monté avant l'insertion ou la pose dans ou sur le réservoir de carburant (1), le montage du module de remplissage (2), avant l'insertion ou la pose, ne comprenant pas la tubulure de remplissage (4), puis le module de remplissage (2) étant inséré ou posé dans le réservoir de carburant (1) et étant fixé dans ou sur le réservoir de carburant (1), et ensuite la tubulure de remplissage (4) étant raccordée fluidiquement à l'accumulateur de carburant (3) de telle sorte qu'un remplissage du réservoir de carburant (1) puisse s'effectuer exclusivement par le biais de la tubulure de remplissage (4) et par le biais de l'accumulateur de carburant (3) du module de remplissage (2).
